# EUROPEAN PATENT APPLICATION

(11) **EP 2 518 305 A2**
(43) Date of publication of application: **31.10.2012**
(21) Application number: 10839687.0
(22) Date of filing: 30.11.2010
(51) Int. Cl.: F03D 1/00, F03D 11/02

(54) **WIND POWER GENERATOR**

(30) Priority: 23.12.2009 KR 20090130207
(71) Applicant: Samsung Heavy Ind. Co., Ltd., Seoul 137-857 (KR)
(72) Inventor: KO, Kyung Min, Geoje-si Gyeongsangnam-do 656-303 (KR); LEE, Chun Sik, Geoje-si Gyeongsangnam-do 656-305 (KR); JEON, Choon Sik, Gyeongsangnam-do 656-303 (KR); SHIN, Bong Hun, Geoje-si Gyeongsangnam-do 656-303 (KR)
(74) Representative: Coyle, Philip Aidan
(86) International application number: PCT/KR2010/008531
(87) International publication number: WO 2011/078490

(57) **Abstract**

The present invention relates to a wind power generator. The power generator comprises a wing section including a hub, wings and a pitch angle control unit. The pitch angle control unit comprises a bearing and a first drive part, and the hub comprises aninstallation area used for a second drive part having a second drive gear to be engaged, in case an available area of the internal gear is damaged, with an area that is different from the available area of the internal gear. Accordingly, the maintenance and repair work can be facilitated and the maintenance and repair costs can be reduced.

## Description

### BACKGROUND

### 1. Technical Field

The present invention relates to a wind power generator.

### 2. Background Art

A wing section included in a wind power generator can control pitch angles of wings and uses a pitch angle unit for controlling the pitch angles of the wings.

The pitch angle unit typically includes a bearing for relative rotation of the wings about a hub. Such a bearing is operated to rotate an inner wheel about an outer wheel by rotating an internal gear of the inner wheel with a drive gear.

When using such a pitch angle unit, it is required to replace the entire bearing if the internal gear of the inner wheel is damaged, making the maintenance and repair difficult and expensive.

### SUMMARY

Some embodiments of the present invention provide a wind power generator that is configured for easier maintenance and repair.

An aspect of the present invention can feature a wind power generator that includes: a tower; a nacelle rotatably supported by the tower; and a wing section arranged in front of the nacelle.Here, the wing section can include: a hub; a wing coupled to the hub; and a pitch angle control unit interposed between the hub and the wing and configured to control a pitch angle of the wing. The pitch angle control unit can include: a bearing having an outer wheel coupled with the hub and an inner wheel coupled with the wing and formed with an internal gear on an internal surface thereof; and a first drive part having a first drive gear engaged with the internal gear, the first drive part being installed in the hub so as to provide driving power for rotating the inner wheel about the outer wheel.The hub can be provided with an installation area for installing a second drive part having a second drive gear to be engaged, in case an available area of the internal gear is damaged, with an area that is different from the available area of the internal gear.

The pitch angle control unit can also include a first lubricant supply part configured to supply lubricant between the first drive gear and the internal gear.

The pitch angle control unit can also include a second lubricant supply unit configured to supply lubricant between the second drive gear and the internal gear.

In case an available area of the internal gear is damaged, the first drive part can be removed from the hub and then used as the second drive part installed in the installation area.

In case an available area of the internal gear is damaged, the first drive gear of the first drive part can be used as the second drive gear.

According to the embodiments of the present invention, in case the available area of the internal gear is damaged by the first drive gear, another area of the internal gear can be used, instead of replacing the entire bearing or separating the entire hub from the nacelle and taking down the hub to the ground for replacement of the bearing, thereby making the maintenance and repair much easier and less costly.

### BRIEF DESCRIPTION OF THE DRAWINGS

FIG. 1 is a brief illustration of a wind power generator in accordance with an embodiment of the present invention.
FIG. 2 illustrates a portion of an exploded view of a wing section included in the wind power generator in accordance with an embodiment of the present invention.

### DETAILED DESCRIPTION

Hereinafter, certain embodiments of the present invention will be described with reference to the accompanying drawings. Any identical or corresponding elements are assigned with identical or corresponding reference numerals, and no redundant description thereof will be provided.

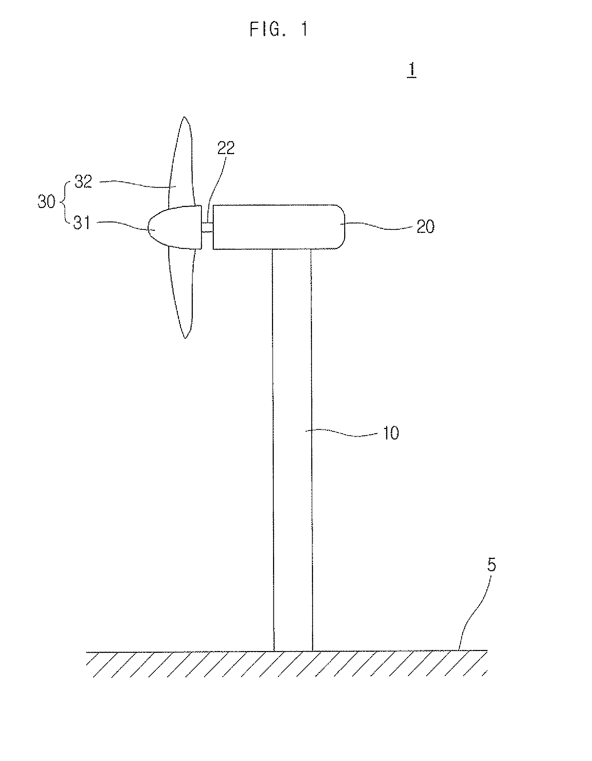

FIG. 1 is a brief illustration of a wind power generator in accordance with an embodiment of the present invention. Referring to FIG. 1, a wind power generator 1 in accordance with the present invention can be configured with a tower 10, a nacelle 10 and a wing section 30.

The tower 10, which is for supporting other structures of the wind power generator 1 from a supporting surface such as a ground 5, is a rigid structure. The tower 10 can be constituted by including concrete or metal.

The nacelle 20 can be arranged above the tower 10. The nacelle 20 can be rotatably supported by the tower 10. Arranged inside the nacelle 20 can be a gearbox (not shown), a generator (not shown) and a control device (not shown) for converting rotary motion energy generated by the wing section 30 to electric energy.

The wing section 30 can be arranged in front of the nacelle 20. The wing section 30, which is for generating rotary energy by use of wind, can be coupled with the nacelle 20 by a main shaft 22. Here, the main shaft 220 can transfer the rotary motion energy of the wing section 30 to the generator (not shown) arranged inside the nacelle 20.

The wing section 30 can include a hub 31, which is coupled to the main shaft 22, a wing 32, which is coupled to the hub 31, and a pitch angle control unit (not shown), which controls a pitch angle of the wing 32. The wing 32 can be provided in plurality, and the plurality of wings 32 can be arranged to be separated from one another along an external surface of the hub 31.

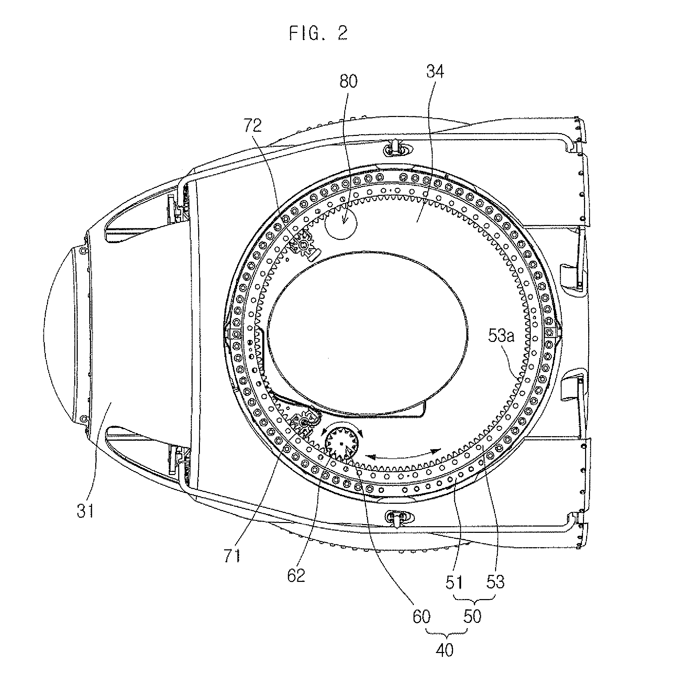

FIG. 2 illustrates a portion of an exploded view of the wing section included in the wind power generator in accordance with an embodiment of the present invention. Referring to FIG. 2, a pitch angle control unit 40 can include a bearing 50 and a first drive part 60.

More specifically, the bearing 50 can include an outer wheel 51, which is coupled with the hub 31, and an inner wheel 53, which has an internal gear 53a formed on an internal surface thereof.

The first drive part 60 is for providing driving power for rotating the inner wheel 53 about the outer wheel 51 and can include a first drive gear 62 engaged with the internal gear 53a of the inner wheel 53. The hub 31 can include a support plate 34 for supporting the first drive part 60. As shown in FIG. 2, the first drive gear 62 can be rotatably arranged on an outer surface of the support plate 34 to be engaged with the internal gear 53a of the inner wheel 53.

Such a first drive part 60 can further include a motor (not shown) that is coupled with the first drive gear 62. Furthermore, the first drive part 60 can further include a gear part (not shown) interposed between the first drive gear 62 and the motor. In such a case, the motor and the gear part can be arranged on an inner surface of the support plate 34.

According to the present embodiment, when the first drive gear 62 rotates by being engaged with the internal gear 53a of the inner wheel 53 of the bearing 50, the wing 32 (see FIG. 1) coupled with the inner wheel 53 can rotate about the outer wheel 51 and the hub 31 and control the pitch angle of the wing 32. Here, the pitch angle refers to an angle formed by the wind and a blade of the wing 32.

The pitch angle of the wing 32 can be between 0 and 90 degrees. The pitch angle of the wing 32 corresponds with an available area of the internal gear 53a. Here, the available area of the internal gear 53a refers to an area of the internal gear 53a engaged with the first drive gear 62 when the inner wheel rotates about the outer wheel 51 so as for the wing 32 to have a particular pitch angle. When the pitch angle is between 0 and 90 degrees, the available area of the internal gear 53a can be 1/4 of an entire area.

The pitch angle control unit 40 can further include a first lubricant supply part 71, which is installed in the support plate 34 of the hub 30. The first lubricant supply part 71 can be arranged adjacently to the first drive gear 62. Such a first lubricant supply part 71 can be engaged and rotate with the internal gear 53a to supply lubricant between the internal gear 53a and the first drive gear 62.

According to the present embodiment, an installation area 80 for installing a second drive part (not shown) can be provided in the hub 30. The installation area 80 can be arranged in the support plate 34 of the hub 30.

The second drive part (not shown) can include a second drive gear (not shown), which is engaged with an area that is different from the available area, if the available area of the internal gear 53a is damaged. In such a case, the second drive gear can be arranged on an outer surface of the support plate 34.

Such a second drive part can further include a motor (not shown) and the like engaged with the second drive gear. Furthermore, the second drive part can further include a gear part (not shown) interposed between the second drive gear and the motor. In such a case, the motor and the gear part can be arranged on an inner surface of the support plate 34.

According to the present embodiment, in case the available area of the internal gear 53a is damaged by the first drive gear 62, another area of the internal gear 53a can be used, by installing the second drive part (not shown) in the installation area 80, instead of replacing the entire bearing 50 or separating the entire hub 30 from the nacelle 20 and taking down the hub 30 to the ground for replacement of the bearing 50, thereby making the maintenance and repair much easier and less costly.

In terms of utilizing the wind power generator 1 in accordance with the present embodiment, in case the available area of the internal gear 53a is damaged, the second drive part can be installed in the installation area. In such a case, the first drive gear 62 can be removed from the first drive part 60, and the removed thirst drive gear 62 can be used as the second drive gear of the second drive part.

Alternatively, in case the available area of the internal gear 53a is damaged, the second drive part being installed in the installation area 80 can be the first drive part 60. That is, the first drive part 60 can be removed from an installation location in the hub 31, and then the first drive part 60 can be re-installed in the installation area 30. In such a case, the first drive part removed from the hub 31 can be used as the second drive part being installed in the installation area 80.

According to the present embodiment, the pitch angle control unit 40 can further include a second lubricant supply part 72, which is installed in the hub 30. The second lubricant supply part 72 can be arranged adjacently to the installation area 80. The second lubricant supply part 72is operated to supply lubricant between the second drive gear (not shown) installed in the installation area 80 and the internal gear 53a. The second lubricant supply part 72 can be controlled to be operated after the second drive part is installed. The second lubricant supply part 72 can be operated in the same method as the first lubricant supply part 71.

Although certain embodiments of the present embodiment have been described, it shall be appreciated that the technical ideas of the present invention is not restricted to the described embodiments and that other embodiments are possible within the same or equivalent technical ideas by those who are skilled in the art to which the present invention pertains by adding, modifying, deleting and supplementing the elements.

## Claims

1. A wind power generator comprising:
a tower;
a nacelle rotatably supported by the tower; and
a wing section arranged in front of the nacelle,
wherein the wing section comprises:
a hub;
a wing coupled to the hub; and
a pitch angle control unit interposed between the hub and the wing and configured to control a pitch angle of the wing, and
wherein the pitch angle control unit comprises:
a bearing comprising an outer wheel coupled with the hub and an inner wheel coupled with the wing and formed with an internal gear on an internal surface thereof; and
a first drive part comprising a first drive gear engaged with the internal gear, the first drive part being installed in the hub so as to provide driving power for rotating the inner wheel about the outer wheel, and
wherein the hub is provided with an installation area for installing a second drive part having a second drive gear to be engaged, in case an available area of the internal gear is damaged, with an area that is different from the available area of the internal gear.

2. The wind power generator of claim 1, wherein the pitch angle control unit further comprises a first lubricant supply part configured to supply lubricant between the first drive gear and the internal gear.

3. The wind power generator of claim 1, wherein the pitch angle control unit further comprises a second lubricant supply unit configured to supply lubricant between the second drive gear and the internal gear.

4. The wind power generator of any one of claims 1 to 3, wherein, in case an available area of the internal gear is damaged, the first drive part is removed from the hub and then is used as the second drive part installed in the installation area.

5. The wind power generator of any one of claims 1 to 3, wherein, in case an available area of the internal gear is damaged, the first drive gear of the first drive part is used as the second drive gear.
